# EUROPEAN PATENT SPECIFICATION

(11) **EP 2 072 352 B1**
(45) Date of publication and mention of the grant of the patent: **18.05.2011**
(21) Application number: 06790961.4
(22) Date of filing: 11.09.2006
(51) Int. Cl.: B60R 25/02

(54) **LOCK FOR STEERING WHEEL**
SCHLOSS FÜR LENKRAD
SYSTEME D'ANTIVOL POUR VOLANT

(43) Date of publication of application: 24.06.2009
(73) Proprietor: Chao, Shih-hsing, Taiwan 710 (CN); Huang, Ho-chih, Taiwan 709 (CN); Lee, Chi-hou, Taiwan 830 (CN)
(72) Inventor: LEE, Chi-hou, Taiwan 830 (CN)
(74) Representative: Lang, Christian
(86) International application number: PCT/CN2006/002338
(87) International publication number: WO 2008/031269

(56) References cited:
- CN-A- 1 970 354
- CN-Y- 2 352 409
- CN-Y- 2 352 410
- GB-A- 315 961
- GB-A- 2 275 033
- US-A- 1 698 008
- US-A- 5 113 674
- US-A- 5 275 030
- US-B1- 6 516 642

## Description

### FIELD OF THE PRESENT INVENTION

The present invention relates to lock, and particular to a lock capable of obstructing a car handler.

### DESCRIPTION OF THE PRIOR ART

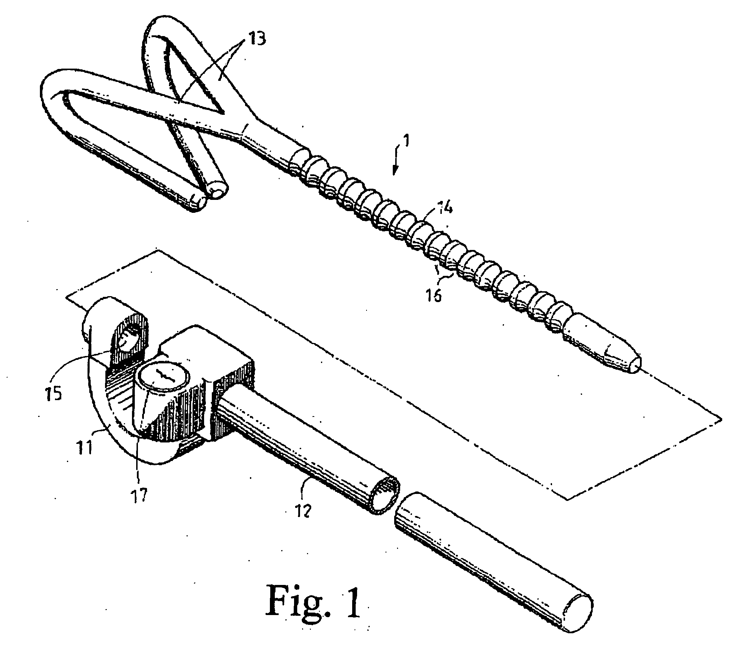

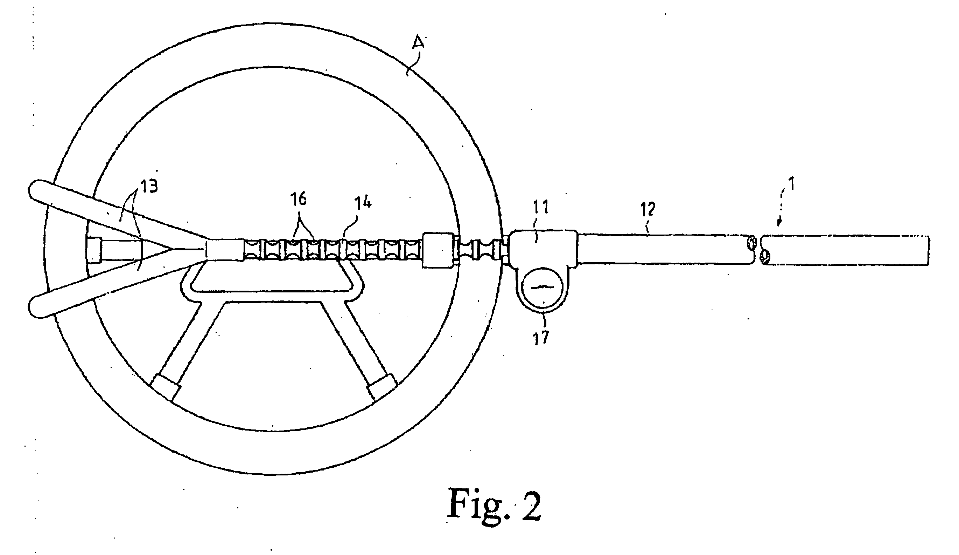

For car burglarproof concern, various locks are put on the market. Most of the car locks are stick type such as Taiwan patent No. 140509 (car handler lock assembly) illustrated in Fig. 1. The schematic view shows the car handler lock assembly 1 including a lock body 11, an extending stick 12, and a hook stick 14. The hook stick 14 can be slid inside the extending stick 12 through a through hole 15 formed to the lock body 11, and grooves 16 formed to the hook stick 14 can be locked by a lock core 17 of the lock body 11. With reference to Fig. 2, a schematic view showing the operation of the lock assembly, a car handler A is hooked and clamped by a hook 13 and the lock body 11. The extending stick 12 protruding from the handler A will be blocked by the windscreen or the driver while steering so as to provide a burglarproof function.

Another example such as Taiwan patent No. 484845 (relates to car handler lock) is illustrated in Figs. 3 and 4. The schematic views show the car handler lock 2 and its operation. By the same principle of previous design, the car handler lock 2 pushes against an inner circle of the handler A by its lock stick 21 and hooks 22 so as to obstruct steering of the handler A.

One another example such as Taiwan patent No. 233581 (related to car handler lock improvement) is illustrated in Fig. 5 and 6, the schematic views showing the lock body 3 and its operation. The lock body 3 has an upper lock body 32 pivoted to a lower lock body 31. Cuts 33 and 34 are formed to the upper and lower lock body respectively. The upper lock body 31 links a long plank 35 with a lock core 36. The cuts 33 and 34 can clamp the handler A and be locked by the lock core 36 with the bent plank 35 penetrating the handler A. The long plank 35 will be stuck to a predetermined position of the car.

Other car handler locks which also have a very voluminous design are disclosed in GB 315 961, US 1,698,008, US 5,113,674 and US 6,516,642,

GB 315 961 showing a car handler lock being fixed to a base of the handler by a frame having a U-shaped profile and comprising a lock.

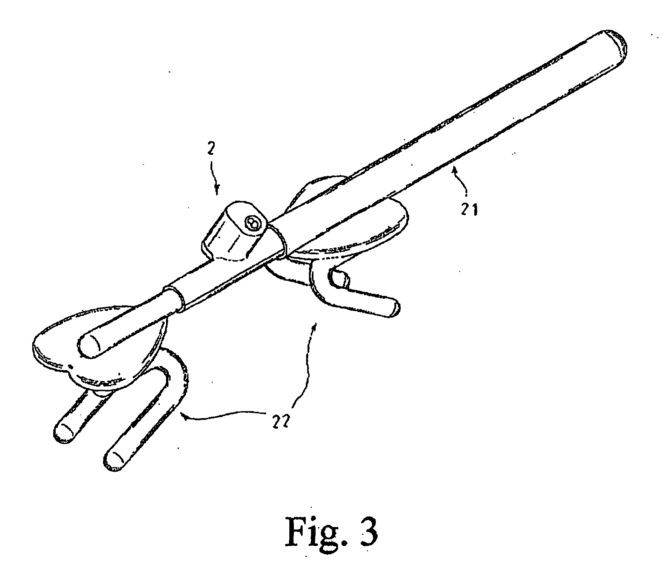

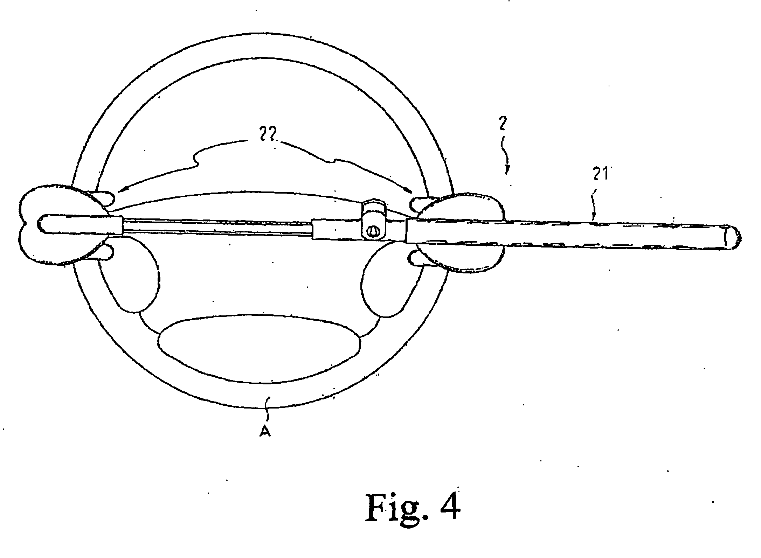

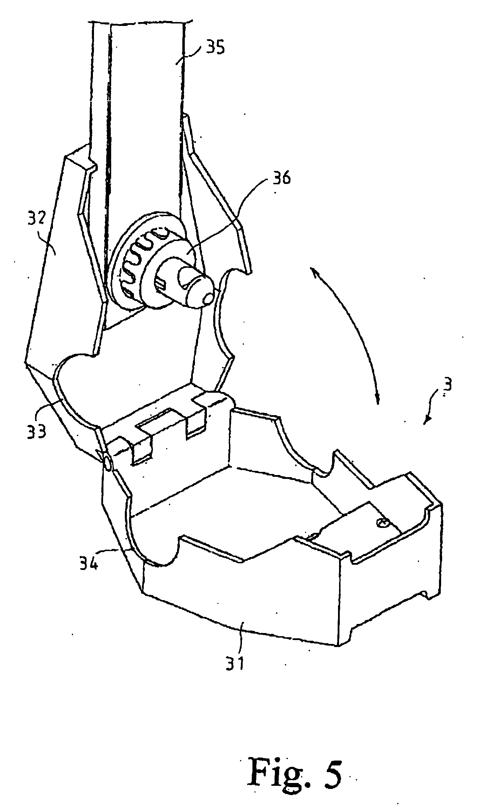

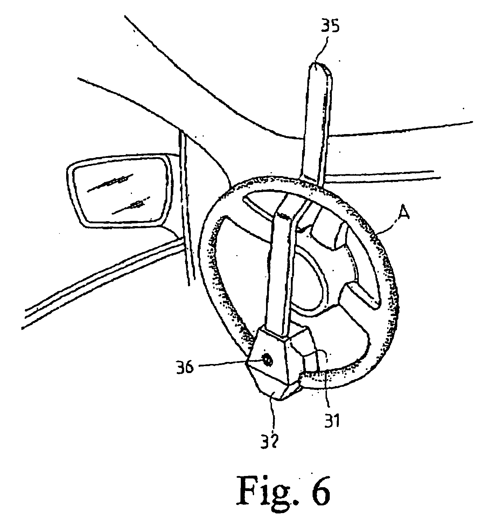

Generally, the previous locks according to figures 1-6 have disadvantages described in the following.

### 1. Not light and convenient

The stick body and hook body used for fixing the handler and the extending stick used for obstructing objects in car are big and heavy. It can cause collides while using and also hard to be operated by female users. The storage especially disturbs the users.

### 2. Poor in burglarproof function

The previous locks are easily removed by a common trick of cutting a part of the handler clamped by the locks.

### 3. Lack of commonness

The hooks or the cuts of previous locks can not fit various handlers with different sizes and diameters. It happens that the handler can not be tightly fixed by the locks or the handler is not fit in the hooks or the cuts. The lock is thus loose and sometimes unable to lock.

### SUMMERY OF THE PRESENT INVENTION

Accordingly, the primary object of the present invention is to provide a car handler lock according to claim 1 and not having the prior disadvantages.
Fig. 1 is a schematic view showing a prior car handler lock.
Fig. 2 is a schematic view showing an operation of the prior car handler lock.
Fig. 3 is a schematic view 2 showing another prior car handler lock.
Fig. 4 is a schematic view 2 showing an operation of the prior car handler lock illustrated in Fig. 3.
Fig. 5 is a schematic view 3 showing on another prior car handler lock.
Fig. 6 is a schematic view 3 showing an operation of the prior car handler lock illustrated in Fig. 5.
Fig. 7 is a detail exploded drawing of a car handler lock according to the present invention.
Fig- 8 is a rough exploded drawing of the car handler lock according to the present invention.
Fig. 9 is a lateral view showing an operation of the car handler lock according to the present invention.
Fig. 10 is a prospective view showing the operation of the car handler lock according to the present invention.
Fig. 11 is a fist schematic view showing the application of the present invention.
Fig. 12 is a second schematic view showing the application of the present invention.
Fig. 13 is a third schematic view showing the application of the present invention.
Fig. 14 is a fourth schematic view showing the application of another embodiment of the present invention.
Fig. 15 is a cross-section view of the embodiment illustrated in Fig. 14.
Fig. 16 is a schematic view showing the application of the embodiment illustrated in Fig. 14.

### DETAILED DESCRIPTION OF THE INVENTION

In order that those skilled in the art can further understand the present invention, a description will be provided in the following in details.

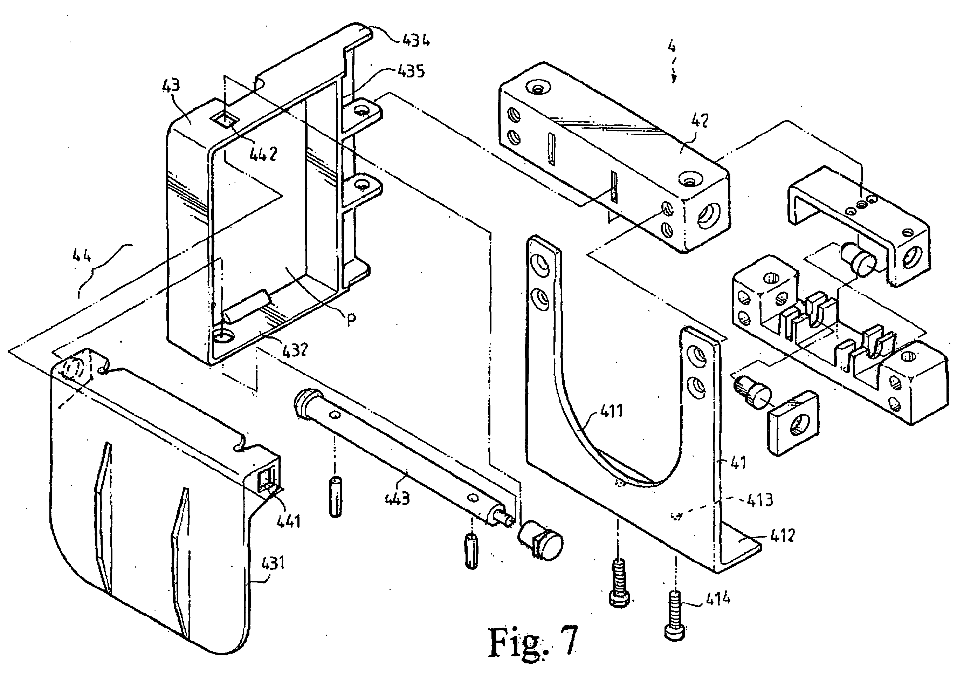

Referring to the Fig. 7, a car handler lock 4 includes a frame 41, the frame extending vertically in fig. 7.

The frame 41 is preferably formed by a plate, or a chunk with a certain thickness made of a light material. The frame 41 has an approximately U-shape cut 411, and the opening of the approximately U-shape cut 411 is used for installation. A lock device 42 is arranged to the opening of the approximately U-shape cut 411. A bottom side of the frame 41 opposite to the opening of the approximately U-shape cut 411 vertically extends to a linking seat 412. The linking seat 412 has a through hole 413 passed through by a linking component 414 so as to fix to a base A2 of a car handler, such that the frame 41 is mounted vertically to the base of the car handler.

The car handler lock 4 also includes a buckle body 43.

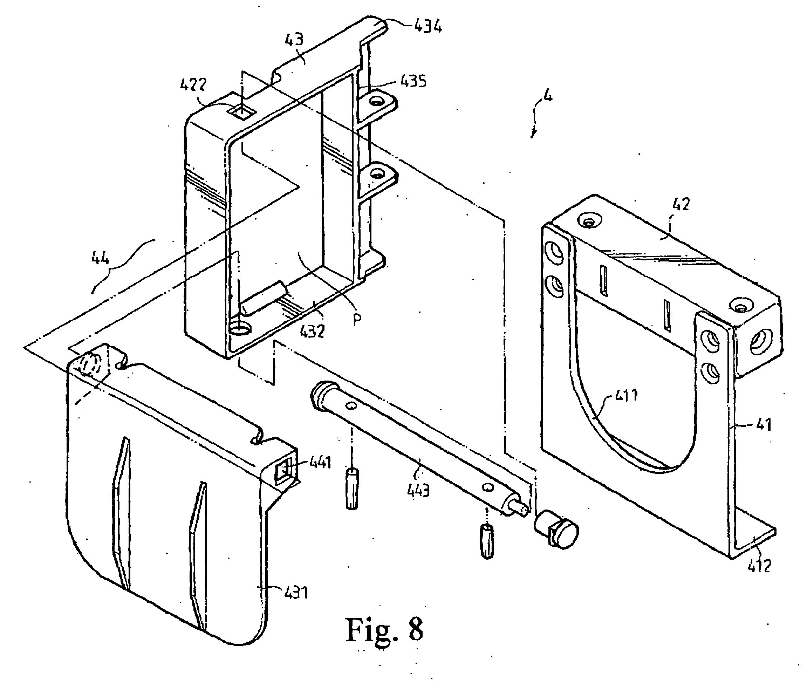

With reference to Fig. 7 and Fig. 8, an embodiment of the buckle body 43 includes a sheet shield unit 431. A bridge buckle 432 is arranged between the shield unit 431 and the lock device 42 of the frame 41 (The bridge buckle 432 links the shield unit 431 and the frame 41 as a bridge). The bridge buckle 432 is preferably made of a plate. The bridge buckle 432 is perpendicularly arranged to the shield unit 431, or the bridge buckle 432 is pivoted to the shield unit 43 with a pivoting angle less than 90 degrees by a pivot unit 44. Referring to Fig. 7, the pivot unit 44 is formed by a shaft 443 passing through through holes 441 of the shield unit 431 and through holes 442 of the bridge buckle 432 with the bridge buckle 432 covering the shield unit 431. The shield unit 431 is restrictedly pivoted to the bridge buckle 432 within 90 degrees so as to prevent the shield unit 431 being over turned to unlock.

Furthermore, a bottom plate 435 and lateral plates 434 of the bridge buckle 432 define a space P as a container for storage while the assembly is shut.

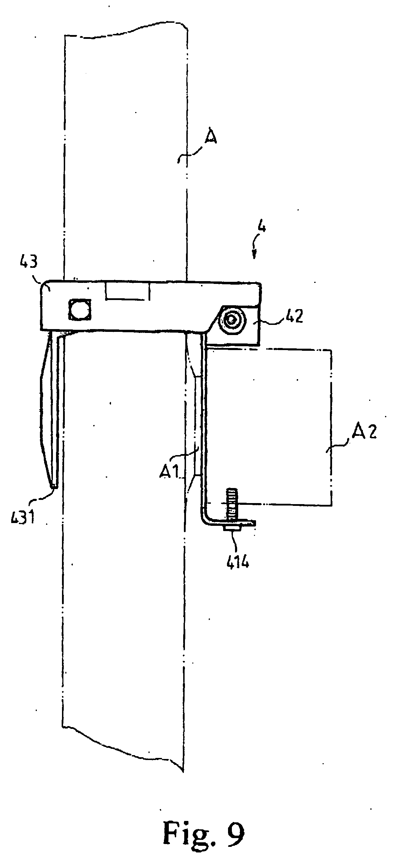

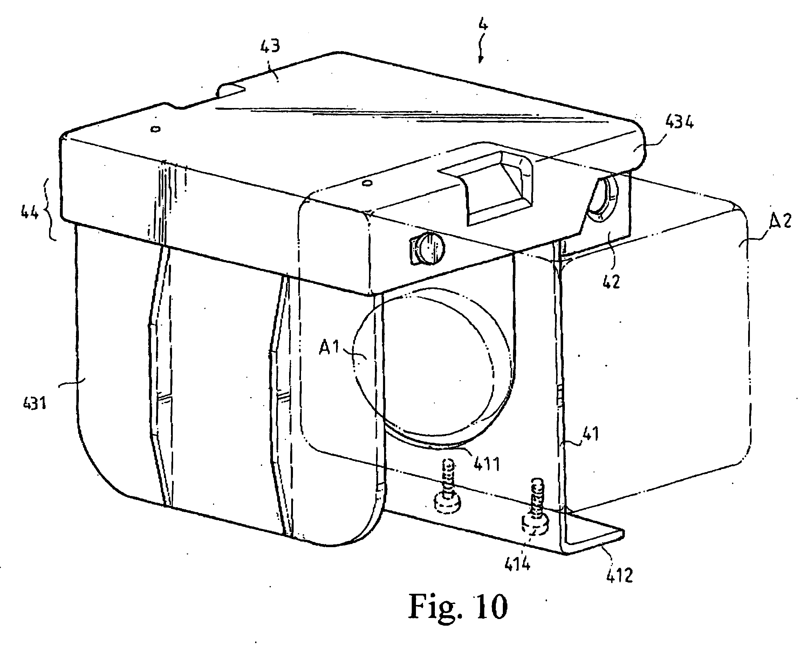

With reference to Figs. 9 and 10, the present invention provides a close space between the frame 41 and the shield unit 431 and the lock device 42 locks the bridge buckle 432. Through the approximately U-shape cut 411, the frame 41 can be slid in and fixed to a shaft A1 of the car handler A. The lock device 42 locks the bridge buckle 432 of the buckle body 43 so that the shield unit 431 will provide an all-round protection to the car handler A.

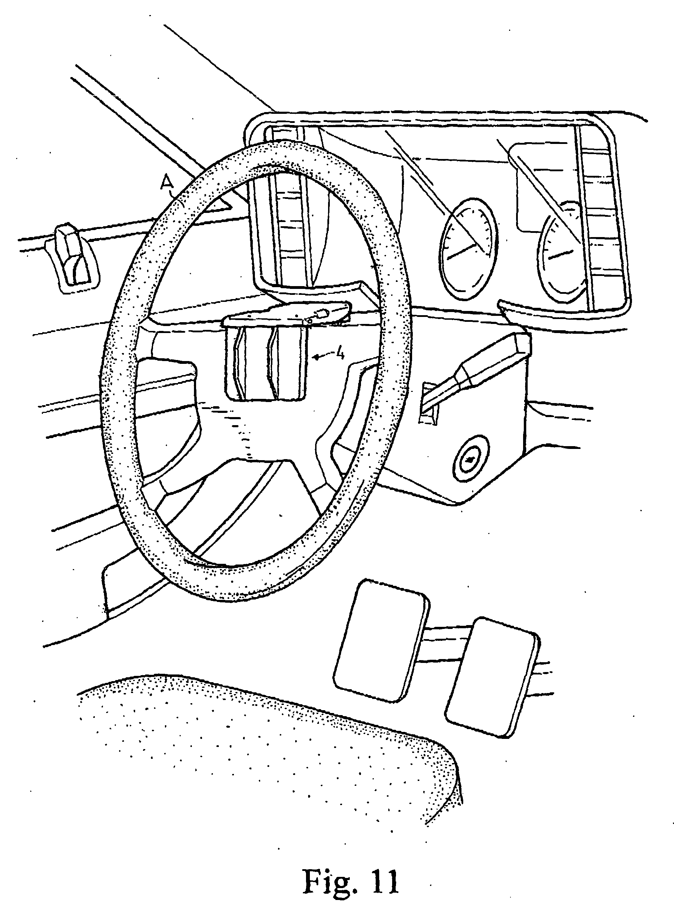

Referring to Fig. 11, a schematic view showing a locking status of the present invention is illustrated. The car handler A is locked by the shield unit 431 in all directions.

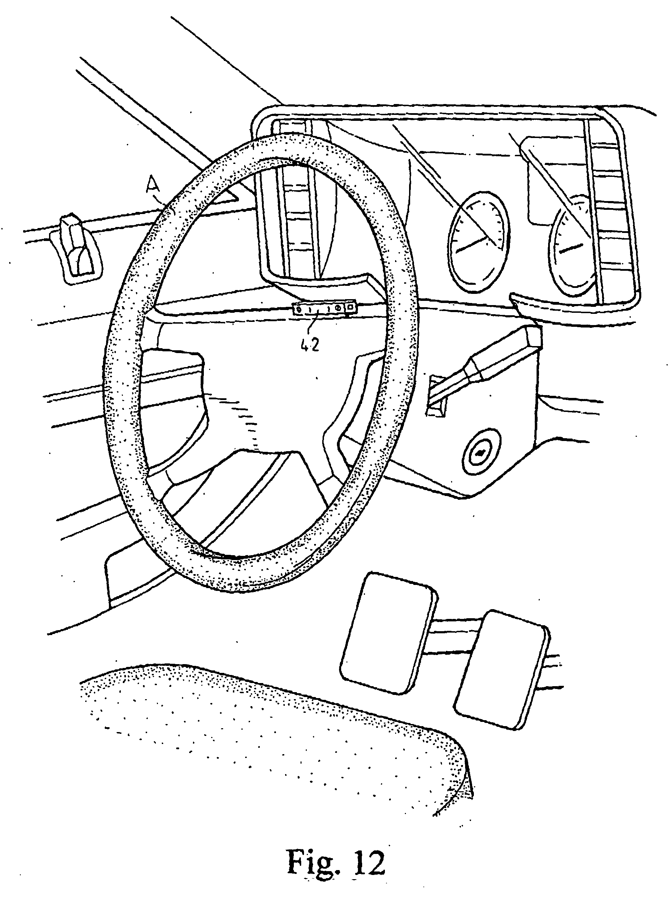

Referring to Fig. 12, a schematic view showing an unlocking status of the present invention is illustrated. The lock device 42 is prospectively shown on a top of the frame 41.

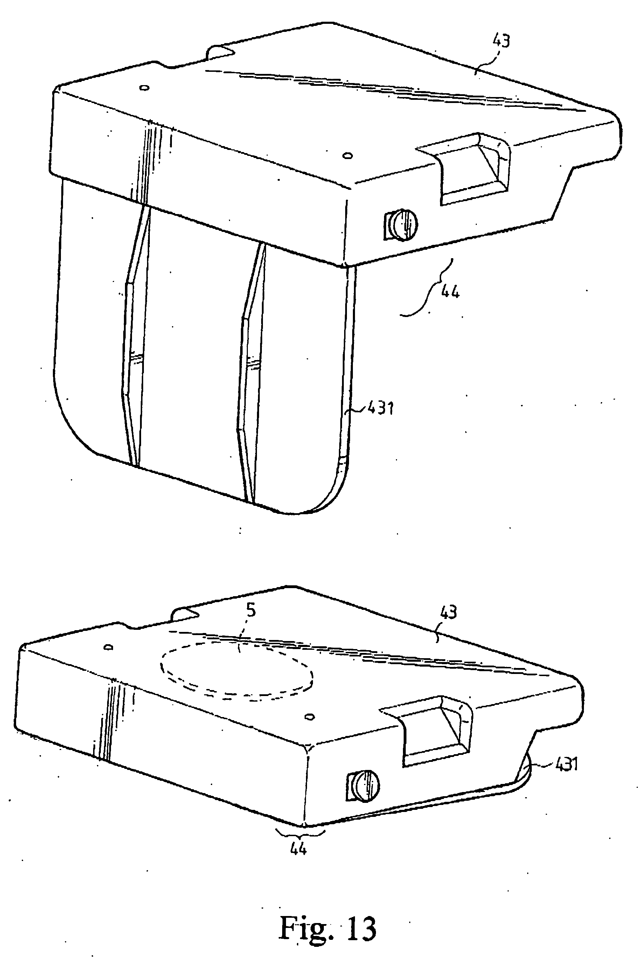

Referring to Fig. 13, a shut status of the buckle body 43 according to the present invention is shown. The container P of the shut buckle body 43 can be used for receiving stuffs such as an alarm 5.

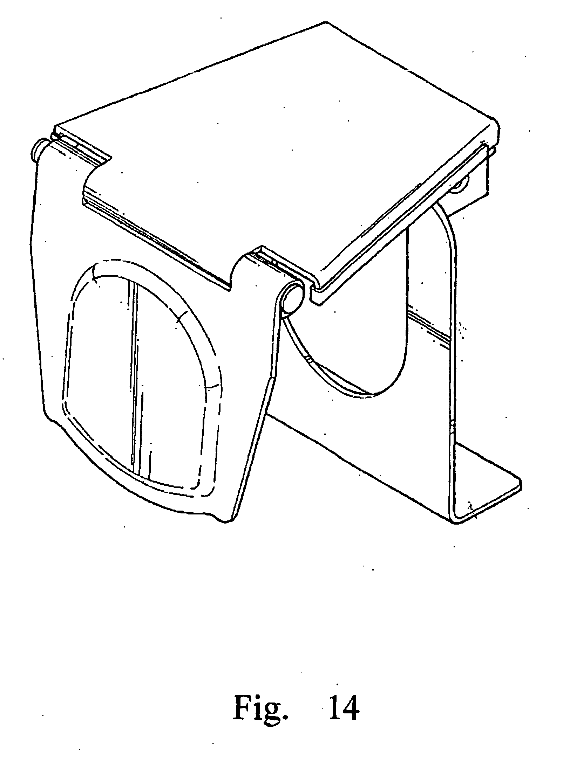

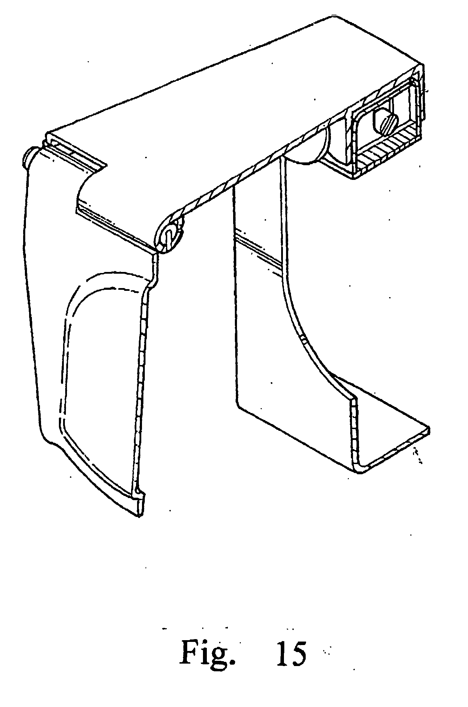

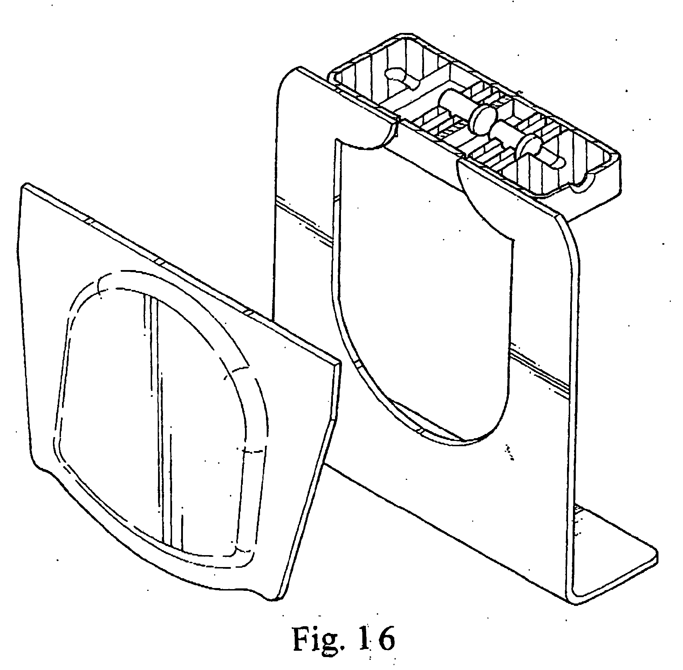

Referring to Fig. 14, a schematic view showing another embodiment of the car handler lock with a better appearance is illustrated. Prospective views of the embodiment of the present invention are shown in Figs. 15 and 16.

Excluding a better burglarproof function, the present invention has many advantages described in the following.
1. An easy and convenient assembly of the present invention will need no complicated technique to apply.
2. A small and light assembly of the present invention avoids scratching the interior or windscreen.
3. Time and space are substantially saved when using the present invention. It is also convenient to put the shut buckle body into car door compartment or other glove compartment in the car.
4. The present invention does not need a large mold and a lot of lock components, the manufacture cost and factory space are much more saved than the prior stick locks.
5. The present invention is no longer cumbersome as prior art and will cause no trouble to female users.
6. The present invention is widely applicable to different sizes of car handlers.
7. An available space is applied inside the shut buckle body which is capable of storing stuffs like an alarm.

## Claims

1. A car handler lock comprising
a frame (41) to be mounted vertically to a base (A2) of a car handler (A); the frame (41) having an approximately U-shape cut (411) and a lock device (42) to be fixed to the opening of the approximately U-shape cut (411) in a mounted state;
a buckle body (43) being removably locked to the lock device (42), wherein the buckle body (43) has a shield unit (431) and a bridge buckle (432) arranged between the lock of the frame device and the shield unit (431);
wherein the bridge buckle (432) if installed covers the linking gaps between itself to the shield unit (431) and to the frame (41) while the bridge buckle (432) of the buckle body (43) is locked to the lock device (42); the approximately U-shape cut (411) of the frame (41) is designed to be slid in over the shaft (A1) of the car handler (A) and fixed to a base of the car handler (A), and the bridge buckle (432) of the buckle body (43) is locked to the lock device (42) so that the shield unit (43 1) locks the car handler (A) in all directions, wherein a bottom side of the frame (41) opposite to the opening of the approximately U-shape cut (411) extends to a linking seat (412); the linking seat (412) has a through hole (413) passed through by a linking component (414) so as to fix the frame (41) to the base of the car handler (A)..

2. The car handler lock as claimed in claim 1, wherein the frame (41) is a plate.

3. The car handler lock as claimed in claim 2, wherein the bridge buckle (432) is a plate.

4. The car handler lock as claimed in claim 2, wherein the shield unit (431) is perpendicular to the bridge buckle (432).

5. The car handler lock as claimed in claim 2, wherein the shield unit (431) is a plate.

6. The car handler lock as claimed in claim 4, wherein the shield unit (431) is pivotable to the bridge buckle (432) with a maximum pivoting angle less than 90 degrees.

7. The car handler lock as claimed in claim 1, wherein a bottom plate (435) and lateral plates (434) formed to the bridge buckle (432) define a container for storage while the assembly is shut.

## Patentansprüche

1. Autosteuerungsverschluss umfassend
einen Rahmen (41), der vertikal an einer Basis (A2) einer Autosteuerung (A) angebracht werden kann, wobei der Rahmen (41) eine ungefähr U-förmige Ausnehmung (411) und eine Verschlussvorrichtung (42) aufweist, die im befestigten Zustand an der Öffnung der ungefähr U-förmigen Ausnehmung (411) befestigt werden kann;
ein Schnallenkörper (43), der mit der Verschlussvorrichtung (42) abnehmbar verrastet ist, wobei der Schnallenkörper (43) eine Schutzschildeinheit (431) und eine Brückenschnalle aufweist (432), die zwischen dem Verschluss der Rahmenvorrichtung und der Schutzschildeinheit (431) angeordnet ist;
wobei die Brückenschnalle (432), sofern sie montiert wurde, die Verbindungslücken zwischen sich und der Schutzschildeinheit (431) und dem Rahmen (41) bedeckt, während die Brückenschnalle (432) des Schnallenkörpers (43) mit der Verschlussvorrichtung (42) verrastet ist, wobei die ungefähr U-förmige Ausnehmung (411) des Rahmens (41) ausgebildet ist, um über den Schaft (A1) der Autosteuerung (A) geschoben und an der Basis der Autosteuerung (A) befestigt zu werden, wobei die Brückenschnalle (432) des Schnallenkörpers (43) mit der Verschlussvorrichtung (42) verriegelt ist, so dass die Schutzschildeinheit (431) die Autosteuerung (A) in alle Richtungen absperrt, wobei sich eine untere Seite des Rahmens (41), die der Öffnung der ungefähr U-förmige Ausnehmung (411) gegenüber liegt, zu einem Verbindungssitz (412) erstreckt und der Verbindungssitz (412) ein Durchgangsloch (413) aufweist, das von einer Verbindungskomponente (414) durchsetzt wird, um den Rahmen (41) an der Basis der Autosteuerung (A) zu befestigen.

2. Autosteuerungsverschluss nach Anspruch 1, wobei der Rahmen (41) eine Platte ist.

3. Autosteuerungsverschluss nach Anspruch 2, wobei die Brückenschnalle (432) eine Platte ist.

4. Autosteuerungsverschluss nach Anspruch 2, wobei die Schutzschildeinheit (431) senkrecht zur Brückenschnalle (432) ist.

5. Autosteuerungsverschluss nach Anspruch 2, wobei die Schutzschildeinheit (431) eine Platte ist.

6. Autosteuerungsverschluss nach Anspruch 4, wobei die Schutzschildeinheit (431) schwenkbar zur Brückenschnalle (432) ist, und zwar mit einem maximalen Schwenkwinkel von weniger als 90 Grad.

7. Autosteuerungsverschluss nach Anspruch 1, wobei, während die Baugruppe geschlossen ist, eine untere Platte (435) und Seitenplatten (434), die an der Brückenschnalle (432) ausgebildet sind, einen Aufbewahrungsbehälter definieren.

## Revendications

1. Blocage de volant de voiture comprenant :
un cadre (41) à monter verticalement sur une base (A2) d'un volant de voiture (A), le cadre (41) ayant une découpe en forme d'U (411) et un dispositif de blocage (42) à fixer à l'ouverture de la découpe approximativement en forme d'U (411) dans un état monté ;
un corps d'attache (43) étant bloqué de manière amovible sur le dispositif de blocage (42), le corps d'attache (43) ayant une unité de bouclier (431) et une attache en pont (432) disposée entre le blocage du dispositif de cadre et l'unité d'écran (431) ;
l'attache en pont (432), si elle est installée, couvrant les espaces de liaison entre elle-même et l'unité de bouclier (431) et le cadre (41) tandis que l'attache en pont (432) du corps d'attache (43) est bloquée sur le dispositif de blocage (42), la découpe approximativement en forme d'U (411) du cadre (41) étant conçue pour être glissée sur la colonne (A1) du volant de voiture (A) et fixée à une base du volant de voiture (A) et l'attache en pont (432) du corps d'attache (43) étant bloquée sur le dispositif de blocage (42) de telle manière que l'unité de bouclier (431) bloque le volant de voiture (A) dans toutes les directions, un côté supérieur du cadre (41) en face de l'ouverture de la découpe approximativement en forme d'U (411) s'étendant vers un appui de liaison (412),
l'appui de liaison (412) ayant un trou traversant (413) traversé par un composant de liaison (414) de manière à fixer le cadre (41) à la base du volant de voiture (A).

2. Blocage de volant de voiture selon la revendication 1 dans lequel le cadre (41) est une plaque.

3. Blocage de volant de voiture selon la revendication 2 dans lequel l'attache en pont (432) est une plaque.

4. Blocage de volant de voiture selon la revendication 2 dans lequel l'unité de bouclier (431) est perpendiculaire à l'attache en pont (432).

5. Blocage de volant de voiture selon la revendication 2 dans lequel l'unité de bouclier (431) est une plaque.

6. Blocage de volant de voiture selon la revendication 4 dans lequel l'unité de bouclier (431) peut être pivotée vers l'attache en pont (432) avec un angle maximum de pivotement inférieur à 90 degrés.

7. Blocage de volant de voiture selon la revendication 1 dans lequel une plaque de fond (435) et des plaques latérales (434) formées pour constituer une attache en pont (432) définissent un conteneur de stockage lorsque l'ensemble est fermé.
